# EUROPEAN PATENT SPECIFICATION

(11) **EP 3 767 764 B1**
(45) Date of publication and mention of the grant of the patent: **14.06.2023**
(21) Application number: 20186085.5
(22) Date of filing: 15.07.2020
(51) Int. Cl.: H02G 3/08, H02G 3/14, H02G 3/10, H02G 3/12

(54) **MOUNTING SYSTEM FOR ELECTRIC OR ELECTRONIC DEVICE**
MONTAGESYSTEM FÜR ELEKTRISCHE ODER ELEKTRONISCHE VORRICHTUNGEN
SYSTÈME DE MONTAGE POUR DISPOSITIF ÉLECTRIQUE OU ÉLECTRONIQUE

(30) Priority: 16.07.2019 BE 201905458
(43) Date of publication of application: 20.01.2021
(73) Proprietor: Niko NV, 9100 Sint-Niklaas (BE)
(72) Inventor: COOREMAN, Tom, 9310 Meldert (Aalst) (BE)
(74) Representative: DenK iP bv

(56) References cited:
- EP-A1- 1 860 748
- EP-A1- 2 632 001
- EP-A1- 2 632 003
- DE-U1- 7 631 667
- US-A- 5 913 439

## Description

### Technical Field

The present invention relates to a mounting system for an electric or electronic device. More particularly, the present invention relates to a mounting system for an electric or electronic device that is water and dust tight.

### Background

Ceiling or wall mountable electric or electronic devices, such as sensors and detectors, are either mounted on a wall or suspended from ceiling structures. Generally, the electric or electronic devices comprise enclosures or housings to accommodate sensor elements or detecting elements in a way to protect these elements from environmental mediums, like water and dust. The electric or electronic devices are required to comply with IP 54 norm. The IP rating is known as Ingress Protection or International Protection ratings that are defined as per the international standard of EN 60529, which is used to define the sealing effectiveness of enclosures against intrusion of foreign bodies, such as water and dust.

Ingress of water and dust into a mounting system that houses the electric or electronic device may affect the functioning of the electric or electronic device. Therefore, there exists a requirement to prevent ingress of water and dust into the mounting system.

EP 2 632 001 describes an electrical appliance intended to be wall-mounted on or flush-mounted in a wall, comprising at least one electrical functional unit, a mounting element for mounting to the wall and fixing the at least one functional unit. The electrical appliance further comprises a cover, placed on the mounting element and comprising a plate having at least one opening and a trim compatible with the at least one functional unit, placed in the at least one opening and comprising a base and a handle. The base has a passage for pins that the handle bears and which are intended to act on the at least one functional unit. The passage is closed by an elastic membrane borne by the base and through which the pins pass. The electrical appliance further has at least one fixing means for fixing the trim to the mounting element. The plate is held between the at least one trim and the mounting element.

For sealing the passage, the latter is covered with an elastic membrane. The latter is traversed by the pads at the level of ports sufficiently small so as not to create space for the sealing around the pin, and sufficiently elastic to deform following the movement of the studs during movement of the joystick. The membrane, covering the passage thus carries the ports at which it is traversed by the pads. Given the elasticity of the membrane, these orifices for pad can easily follow the movement of the pads, and the diaphragm therefore guarantees the sealing of the passage, despite the presence of the pads in the form of movable elements.

An inner seal is provided for each trim. The fact that the plate is taken between, on the one hand, the mounting member, and, on the other hand, the trim attached to the mounting member by at least one fastening means, makes it possible to guarantee good retention of the whole cover to the mounting member, but also of ensuring the compression of the seals between the plate, common to different apparatus easily in the same range, and, on the one hand, the mounting member, namely an interface seal, or, on the other hand, the trim, namely at least one inner seal.

EP 1 860 748 describes a sealed electrical equipment including a mounting element for mounting at least one equipment mechanism, a cover for putting on the front of said mounting element, and a peripheral sealing gasket interposed between the cover and the mounting element. The cover comprises a plate in the form of a frame that carries snap-fastener means adapted to co-operate, in a manner that can be separated without tools, with complementary snap-fastening means of the mounting element. The cover includes at least two distinct parts, including at least one trim defining the function of the sealed electrical equipment for fitting in each opening defined internally by said plate. Each trim includes tabs suitable for inserting between said snap-fastener means of the plate and a portion of the mounting element firstly to lock said snap-fastener means of the plate on the complementary snap-fastener means of the mounting element, and secondly to generate a pressure force from the plate against the mounting element, thereby compressing the sealing gasket.

EP 2 632 003 describes an electrical appliance designed to be mounted onto the surface of a wall and comprising at least one electric functional block and a mounting box for mounting onto the wall and securing the at least one functional block. The mounting box has a receiving cavity for the at least one functional block, delimited by the back wall. The mounting box has, on the back wall and for passing a traversing element such as a cable or screw through the latter, a plurality of passage areas, in particular in the form of an opening hole arranged in the back wall and/or an arrangement of weakened areas for facilitating the creation of such a hole by removing a detachable portion. The electrical appliance also comprises a single seal fully covering each passage area, placed against the back wall from an outer side of the mounting box opposite to the inner side around the at least one passage area, fixed to the back wall at least in each passage area and able to match with the section of the whole traversing element introduced through the passage area so as to contribute to the sealing of the passage area. Further, the seal is fixed to the back wall at least in the area of each passage area, at least along a closed contour surrounding the latter. The seal covers substantially all of the back wall and has, along its outer perimeter and from the side opposite to the receiving cavity, a continuous rib forming at least one lip.

### Summary of the Invention

It is an object of embodiments of the present invention to provide a mounting system for an electric or electronic device that is watertight and protects the electric or electronic device from ingress of water and dust.

The above objective is accomplished by a device according to claim 1.

The present invention provides a mounting system according to claim 1 for mounting an electric or electronic device in or on a ceiling or a wall. The mounting system comprises a back housing adapted for mounting the electric or electronic device in or on the ceiling or the wall; a front housing adapted to be connected to the back housing by sliding into the back housing; and a sealing arrangement. The sealing arrangement comprises a first sealing member between the front housing and the back housing, the first sealing member being adapted to provide a seal between the back housing and the front housing, a second sealing member located at a rear portion of the back housing and intended for providing a sealing between the back housing of the mounting device and the wall or ceiling, when mounted on the wall or ceiling, a plurality of third sealing members adapted to cover a plurality of fastening holes defined in the back housing, and a sealing flap formed by an area in the back housing that is made out of sealing material, and a fourth sealing member located on a periphery of the sealing flap for enhancing the sealing capacity of the sealing flap. The first sealing member, the second sealing member, each of the plurality of third sealing members, and the fourth sealing member are formed in one piece and together define or form a so-called master sealing member.

A mounting system according to embodiments of the invention prevents dust and water from ingressing the mounting system and bringing damage to the electric or electronic device.

An advantage of a mounting system according to the invention is that all parts of the sealing arrangement can be made in one manufacturing step and out of the same material.

Further, a mounting system according to embodiments of the invention can easily be installed onto a ceiling or a wall. Fasteners, such as screws, can be easily pierced through the third sealing members covering the fastening holes and can be held in place by the third sealing members. This allows the mounting system to be quickly mounted to the ceiling or the wall, as the user need not to hold the fasteners while installing the mounting system.

Further, the simple structure of the back housing makes it compatible with different types of mounting boxes. The first sealing member, the second sealing member, the third sealing members, and the fourth sealing member, either together or individually, may render the mounting system IP 54 norm compliant, thereby making the mounting system particularly suitable for being used in outdoors.

According to embodiments of the invention, the front housing may comprise a protrusion, the protrusion comprising an edge extending from a wall of the front housing at an inclined angle θ which may be between 15 degrees and 80 degrees. The edge is adapted to compress the first sealing member against the back housing, thereby forming a first region of compression, when the front housing is connected to the back housing.

The protrusion of the front housing compresses the first sealing member over a length of between 0.2 mm and 0.3 mm, against the back housing.

According to embodiments of the invention, the mounting system may furthermore comprise an electric or electronic device receptacle adapted to be attached to the front housing and further being adapted to receive the electric or electronic device.

According to specific embodiments, the electric or electronic device may be a sensor or a detector. According to such embodiments, the mounting system may further comprises a sensor receptacle adapted to be attached to the front housing and further adapted to receive a sensor module.

These and other features and advantages of the present invention will be apparent to those skilled in the art from the following description and the accompanying drawings. Accordingly, it will be recognized by those skilled in the art that changes, or modifications, may be made to the described embodiments without departing from the broad inventive concepts of the present invention.

### Brief Description of the Drawings

It has to be noted that same reference signs in the different figures refer to same, similar or analogous elements.
FIG. 1 illustrates a mounting system mounted to a ceiling or a wall;
FIG. 2 illustrates a cross-sectional view of the mounting system of FIG. 1, according to an embodiment of the present invention;
FIG. 3 illustrates an exploded view of a sub-assembly of the mounting system, according to an embodiment of the present invention;
FIG. 4 illustrates an enlarged view of a portion 'A' of FIG. 2, according to an embodiment of the present invention;
FIG. 5A illustrates an exploded view of a back housing assembly of the mounting system, according to an embodiment of the present invention;
FIG. 5B illustrates a front perspective view of the back housing assembly, according to an embodiment of the present invention;
FIG. 5C illustrates a rear perspective view of the back housing assembly, according to an embodiment of the present invention;

### Detailed Description

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes. The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein, are made collectively or individually when there may be more than one element of the same type. However, such references are merely exemplary in nature. It may be noted that any reference to elements in the singular may also be construed to relate to the plural and vice-versa without limiting the scope of the invention to the exact number or type of such elements unless set forth explicitly in the appended claims.

The present invention provides a mounting system for mounting an electric or electronic device in or on a ceiling or a wall. The mounting system comprises a back housing adapted for mounting the electric or electronic device in or on the ceiling or the wall, a front housing adapted to be connected to the back housing by sliding into the back housing, and a sealing arrangement. The sealing arrangement comprises a first sealing member between the front housing and the back housing, the first sealing member being adapted to provide a seal between the back housing and the front housing, a second sealing member located at a rear portion of the back housing and intended for providing a sealing between the back housing of the mounting device and the wall or ceiling, when mounted on the wall or ceiling, a plurality of third sealing members adapted to cover a plurality of fastening holes defined in the back housing, and a sealing flap coupled to the back housing, and a fourth sealing member located on a periphery of the sealing flap.

A mounting system according to embodiments of the invention prevents dust and water from ingressing the mounting system and bringing damage to the electric or electronic device.

Further, a mounting system according to embodiments of the invention can easily be installed onto a ceiling or a wall. Fasteners, such as screws, can be easily pierced through the third sealing members covering the fastening holes and can be held in place by the third sealing members. This allows the mounting system to be quickly mounted to the ceiling or the wall, as the user need not to hold the fasteners while installing the mounting system.

Further, the simple structure of the back housing makes it compatible with different types of mounting boxes. The first sealing member, the second sealing member, the third sealing members, and the fourth sealing member, either together or individually, may render the mounting system IP 54 norm compliant, thereby making the mounting system particularly suitable for being used in outdoor applications.

The present invention will hereinafter be described by means of different embodiments. It has to be understood that these embodiments are only for the ease of understanding the invention and are not intended to limit the invention in any way.

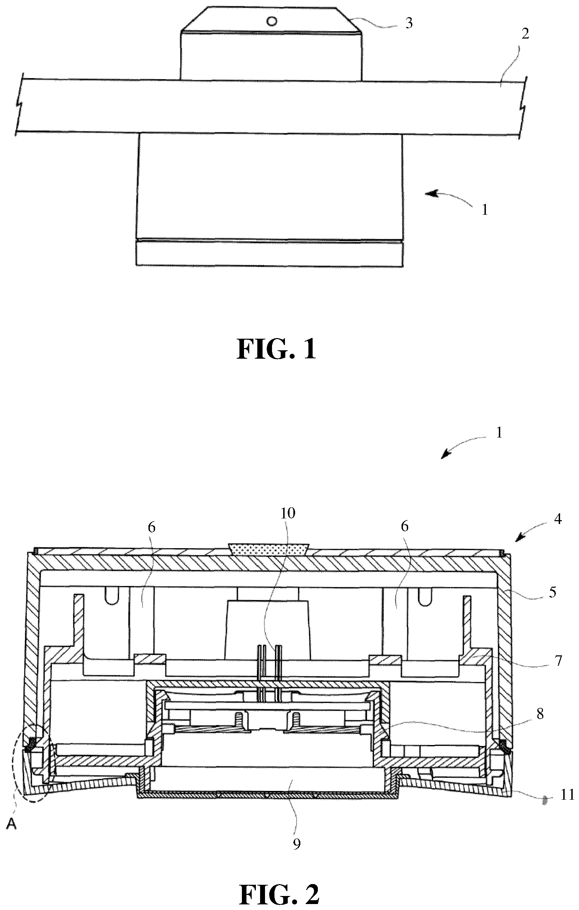

Referring to FIG. 1, a mounting system 1 mounted to a ceiling or a wall 1 is illustrated. The mounting system 1 is adapted to removably receive an electric or electronic device, such as, for example, a sensor or a detector, a switch, an outlet socket or the like. A mounting box 3 is located behind the wall or in the ceiling 2 to engage with the mounting system 1, the mounting box 3 being adapted for housing electrical cables and other electric or electronic parts of the electric or electronic device. The mounting box 3 may be provided in a hole in the wall or ceiling 2. Various fastening mechanisms, such as, for example, threads, press fit, and snap fit, for fixing the mounting system 1 to the mounting box 3 can be used as is known to a person skilled in the art.

FIG. 2 illustrates a cross-sectional view of a mounting system 1 according to an embodiment of the present invention. The mounting system 1 comprises a back housing 4 adapted to mount the electric or electronic device on the wall or in a ceiling 2. The back housing 4 may be a hollow cylindrical structure. A wall 5 of the back housing 4 defines multiple holes 6 adapted for receiving cables or cable holders for connecting the electric or electronic device to the electrical network. The mounting system 1 further comprises a front housing 7. The front housing 7 may be implemented as a hollow structure. The front housing 7 is adapted to be connected to the back housing 4 by, for example, sliding into the back housing 4. As such, diameters of the back housing 4 and the front housing 7 may be adapted to allow the front housing 7 to slide into the back housing 4.

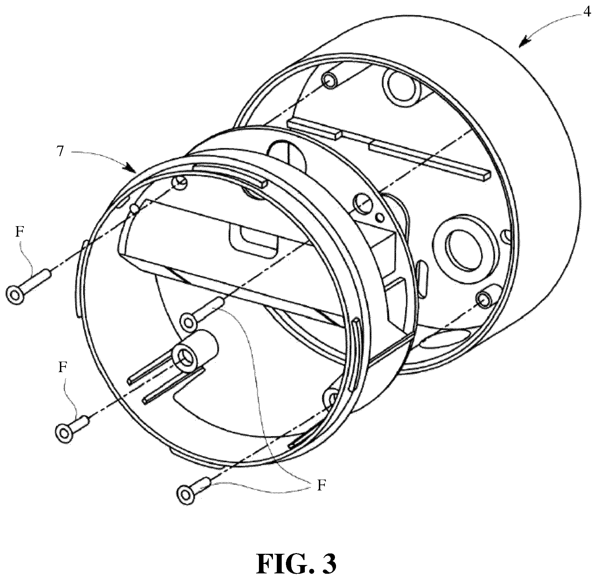

FIG. 3 illustrates an exploded view of a sub-assembly of the mounting system 1 showing the front housing 7 and the back housing 4, according to an embodiment of the present invention. As described earlier, the front housing 7 is adapted to be connected to the back housing 4 by sliding into the back housing 4. Subsequently, fasteners F are used, as shown, to rigidly connect the front housing 7 to the back housing 4.

The mounting system 1, may comprise a receptacle 8 for receiving the electric or electronic device 9 (see FIG. 2). In case of the electric or electronic device 9 being a sensor or a detector, the receptacle 8 may be a sensor receptacle 8 suitable for receiving a sensor module 9. The electric or electronic device receptacle 8, e.g. sensor receptacle, may be adapted to be attached to the front housing 7. Electrical wires or cables 10 from the electric or electronic device 9, may be routed through the back housing 4, as shown in FIG. 2, to be connected to the electrical cables coming from the mains which are in the mounting box 3 located in the wall or ceiling 2.

The mounting system 1 may furthermore comprise a cover 11 for retaining the electric or electronic device receptacle 8 with the electric or electronic device 9 attached to the front housing 7. Therefore, the cover 11 may be removably fixed to the front housing 7. Removably fixing the cover 11 to the front housing 7 may, for example, be done by means of e.g. screw thread and by means of a rotating movement of the cover 11 and the front housing 7 with respect to each other.

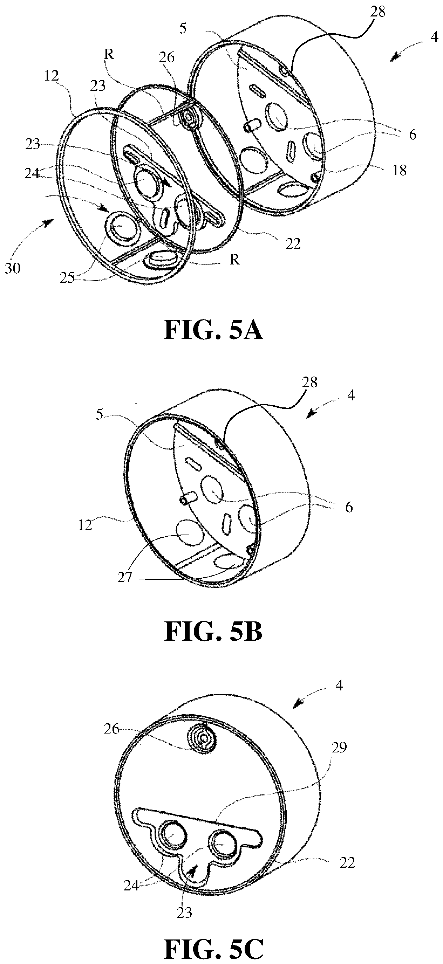

The mounting system 1 further comprises a sealing arrangement. The sealing arrangement comprises a first sealing member 12 between the front housing 7 and the back housing 4. The first sealing member 12 is adapted to provide a seal between the back housing 4 and the front housing 7 so as to prevent water and/or dust to ingress into the housing and damage the parts of the electric or electronic device 9. The first sealing member 12 may be ring-shaped so as to fit in between the back housing 4 and the front housing 7 (see FIG. 5A). According to embodiments of the invention, the first sealing member 12 may be provided on an outer edge of the front housing 7 or an outer edge of the back housing 4. It may either be fixedly provided on one of the outer edge of the front housing 7 or an outer edge of the back housing 4 or it may be provided as a separate part that is provided in between the front housing 7 and the back housing 4 when the front housing 7 is connected to the back housing 4.

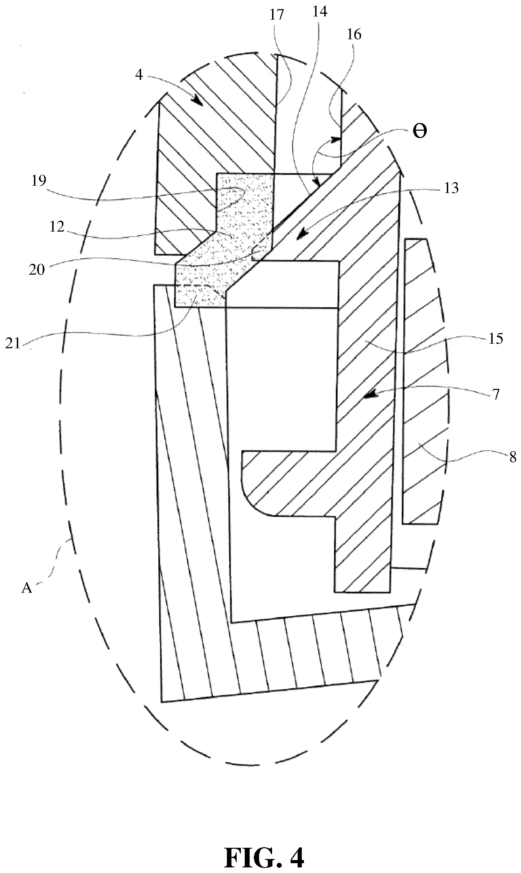

FIG. 4 illustrates an enlarged view of the part indicated with A in FIG. 2. According to embodiments of the invention, the front housing may comprise a protrusion 13, the protrusion 13 comprising an edge 14 extending from a wall 15 of the front housing 7. In particular, an outer surface 16 of the front housing 7 that faces an inner surface 17 of the back housing 4 in the sub-assembly of the mounting system 1, comprises the protrusion 13. The edge 14 may, according to embodiments of the invention, extend at an inclined angle 'θ' with respect to the wall 15 of the front housing 7. According to embodiments of the invention, the angle θ may be between 0 degrees and 179 degrees and may preferably be between 15 degrees and 80 degrees.

The first sealing member 12 may be located on the periphery 18 of the back housing 4 (see FIG. 5A). According to embodiments of the invention, the back housing 4 may comprise a groove 19 extending along the periphery 18 of the back housing 4. The groove 19 may comprise a chamfered edge inclined at an angle of about 45 degrees. In addition, the first sealing member 12 may comprise a chamfered surface and may be so designed to conform with the chamfered edge of the groove 19 of the periphery 18. As such, the groove 19 aids in rigid seating of the first sealing member 12 on the back housing 4.

The first sealing member 12 is adapted to align between the front housing 7 and the back housing 4. In addition, the first sealing member 12 is adapted to seal the back housing 4 and the front housing 7. When the front housing 7 is slid into the back housing 4 and fastened to the back housing 4 via the fasteners F, the edge 14 of the protrusion 13 is adapted to compress the first sealing member 12 in the direction of the sliding. As such, the first sealing member 12 is compressed between the protrusion 13 of the front housing 7 and the back housing 4. This compression may result in a first region of compression 20 in the first sealing member 12. Besides increasing a surface contact area between the front housing 7 and the first sealing member 12, such compression by the protrusion 13 also enhances better sealing by the first sealing member 12. This renders the mounting system 1 compliant with the known IP 54 standards. According to embodiments of the invention, the protrusion 13 may compress the first sealing member 12 by a length in a range of between 0.2 mm and 5 mm and preferably in a range of between 0.2 mmm and about 0.3 mm against the back housing 202, or in other words, the first region of compression 20 may have a length of between 0.2 mm and 5 mm and preferably between 0.2 mm and 0.3 mm.

Further, when the electric or electronic device receptacle 8 is fixed to the front housing 7 and when the cover 11 is connected to the electric or electronic device receptacle 8, the first sealing member 12 may also be compressed by this electric or electronic device receptacle and by the cover 11. This compression results in a second region of compression 21 in the first sealing member 12. Such compression increases the surface area of contact between the electric or electronic device receptacle 8 and the back housing 4 and ensures better sealing of contact surfaces. Because of that, ingress of water and/or dust into a space between the electric or electronic device receptacle 8 and the front housing 7 may further be prevented, hence making the mounting system 1 even more compliant with the IP 54 norm.

FIG. 5A, 5B and 5C schematically illustrates a back housing 4 with a sealing arrangement 30 according to embodiments of the invention.

According to the present invention, the sealing arrangement 30 furthermore comprises a second sealing member 22, for providing a seal between the back housing 4 and the wall or ceiling 2 on or to which the mounting system 1 is provided. The second sealing member 22 may, according to the present example, be ring-shaped so as to fit in between the back housing 4 and the wall or ceiling 2, as shown in FIG. 5A. According to embodiments of the invention, the first sealing member 12 and the second sealing member 22 are provided as one piece. In that case, ribs R may extend between the first sealing member 12 and the second sealing member 22. The length of the ribs R may be equal to the height of the back housing 4. Preferably, the ribs R may be made out of a same sealing material as the first sealing member 12 and the second sealing member 22.

According to the invention, the sealing arrangement 30 furthermore comprises a sealing flap 23. The sealing flap 23 may be an area in the back housing 4 that is made out of sealing material.

The sealing arrangement 30 further comprises multiple third sealing members 24, 25, 26 adapted to respectively cover and seal the holes 6 for receiving cables or cable holders coming out of the wall or ceiling 2, to cover and seal holes 27 for receiving cables or cable holders lying on the wall or ceiling 2 and to cover and seal hole 28 for receiving fixing means for fixing the mounting system 1 to the wall or ceiling 2.

Third sealing members 24 are, as mentioned above, for covering and sealing holes 6 for receiving cables or cable holders with cables for connecting the electric or electronic device 9 to the electrical network. The holes 6 are adapted to receive cables or cable holders with cables that are coming out of the wall or ceiling 2, and thus from behind the mounting system 1. The cables may be pushed through third sealing members 24, thereby partly breaking the third sealing member 24. The third sealing member 24 thereby closely surrounds the cables, thereby sealing the hole 6 with the cable in it.

This is similar for third sealing members 25, which cover and seal holes 27 for receiving cables or cable holders with cables which are located on the wall 2. Hence, cables are coming from below the mounting system 1 and run up a wall towards the mounting system 1. The cables or cable holders are in a similar way as described above pushed through the third sealing members 25, thereby sealing the holes 27.

For fixing the mounting system 1 to the wall or ceiling 2, a screw may be pushed through hole 28. When the screw is pushed through the hole 28, the sealing material closely surrounds the screw, thereby sealing the hole 28. An advantage hereof is that screws can be put into the hole 28 before mounting the system to a wall or ceiling 2. This makes the mounting easier. With one hand, an installer can bring the mounting system 1 to the wall or ceiling 2 with the screw already provided, hold the mounting system 1 against the wall or ceiling 2 with the same hand and start screwing with the other hand. The installer does not have to take the screw anymore when holding the mounting system 1 against the wall or ceiling 2, as the screw is already provided.

The presence of the second sealing member 22 may, according to embodiments of the invention, form a backup for the third sealing members 24, 25, 26. If one or more of these third sealing members 24, 25, 26 fail, water and/or dust will still be kept out of the mounting system 1 and thus away from the electric or electronic device 2, by the second sealing member 22.

According to embodiments of the invention, and as can be seen in FIG. 5C, the sealing flap 23 may surround third sealing members 24. The sealing flap 23 comprises at its edges or around its periphery, a fourth sealing member 29 which, when the mounting system 1 is fixed to a wall of ceiling 2, touches the wall or ceiling 2 thereby enhances the sealing capacity of the sealing flap 23. The sealing flap 23 is coupled to the back housing 4. The shape of the sealing flap 23 is not limited to the embodiment illustrated in FIG. 5A to 5C and may be varied according to the configuration of the holes 6 defined in the back housing 4.

According to the invention and as illustrated in FIG. 5A, the first sealing member 12, the second sealing member 22, the third sealing members 24, 25, 26, and the fourth sealing member 29 are formed as one part and form a so-called master sealing member 30. The back housing 4 and the master sealing member 30 together form the back housing assembly. According to such preferred embodiments of the invention, the first sealing member 12, the second sealing member 22, the third sealing members 24, 25, 26, and the fourth sealing member 29 may be fixedly provided to the back housing 4 during manufacturing of the back housing 4.

FIG. 5B illustrates a front perspective view of the back housing assembly, according to an embodiment of the present invention. In particular, FIG. 5B illustrates the master sealing member 30 coupled to the back housing 4.

According to embodiments of the invention, the first sealing member 12, the second sealing member 22, the third sealing members 24, 25, 26, and the fourth sealing member 29 may be made of a flexible material, such as for example an elastomer.

Upon mounting the back housing 4 to the wall 2 with use of fasteners, the second sealing member 22 is compressed against the wall 2. The second sealing member 22 thereby prevents water leakage or dust ingress via the wall 2 to the back housing 4. In the event of failure of the second sealing member 22, the third sealing members 24, 25, 26 may prevent dust and water ingress into the back housing 4, thereby making the mounting system 1 compliant with the IP 54 standard.

Various embodiments disclosed herein are to be taken in the illustrative and explanatory sense and should in no way be construed as limitations to the present invention.

Embodiments of the present invention provide a mounting system 1 for mounting an electric or electronic device, such as, for example, a sensor or a detector in or on a ceiling or wall 2. A mounting system 1 according to embodiments of the invention may be suitable for being used for indoor as well as for outdoor applications.

A mounting system 1 according to embodiments of the invention can be used with various kinds of mounting boxes.

## Claims

1. A mounting system (1) for mounting an electric or electronic device (9) in or on a ceiling or a wall (2), the mounting system (1) comprising:
- a back housing (4) adapted for mounting the electric or electronic device (9) in or on the ceiling or the wall (2);
- a front housing (7) adapted to be connected to the back housing (4) by sliding into the back housing (4); and
- a sealing arrangement (30) comprising:
- a first sealing member (12) between the front housing (7) and the back housing (4) adapted to provide a seal between the back housing (4) and the front housing (7),
- a second sealing member (22) for providing a seal between the back housing (4) and the wall or ceiling (2) and located around the periphery of a rear portion of the back housing (4), wherein the rear portion is adapted to be fixed to the ceiling or the wall (2),
- a plurality of third sealing members (24, 25, 26) adapted to cover a plurality of holes (6, 27, 28) defined in the back housing (3), and
- a sealing flap (23) formed by an area in the back housing (4) that is made out of sealing material **characterised in that** the sealing flap (23) comprises a fourth sealing member (29) located around the periphery of the sealing flap (23) for enhancing the sealing capacity of the sealing flap (23) by touching the ceiling or wall (2) when the mounting system is fixed to the sealing or wall (2), and **in that** the first sealing member (12), the second sealing member (22), each of the plurality of third sealing members (24, 25, 26), and the fourth sealing member (29) are together formed in one piece to form a master sealing member.

2. Mounting system (1) according to claim 1, wherein the front housing (7) comprises a protrusion (13), the protrusion (13) comprising an edge (14) extending from a wall (15) of the front housing (7) at an inclined angle (θ), wherein the edge (14) is adapted to compress the first sealing member (12) against the back housing (4), thereby forming a first region of compression (20), when the front housing (7) is connected to the back housing (4).

3. Mounting system (1) according to claim 2, wherein the inclined angle (θ) is between 15 degrees and 80 degrees.

4. Mounting system (1) according to claim 2, wherein the length of the first region of compression (20) is between 0.2 mm and 0.3 mm.

5. Mounting system (1) according to any of the previous claims, wherein the mounting system (1) furthermore comprises an electric or electronic device receptacle (8) adapted to be attached to the front housing (7) and wherein the mounting system (1) is further adapted to receive the electric or electronic device (9).

## Patentansprüche

1. Montagesystem (1) zum Montieren einer elektrischen oder elektronischen Vorrichtung (9) in oder an einer Decke oder einer Wand (2), das Montagesystem (1) umfassend:
- ein hinteres Gehäuse (4), das zum Montieren der elektrischen oder elektronischen Vorrichtung (9) in oder an der Decke oder der Wand (2) angepasst ist;
- ein vorderes Gehäuse (7), das angepasst ist, um mit dem hinteren Gehäuse (4) durch Gleiten in das hintere Gehäuse (4) verbunden zu werden; und
- eine Dichtungsanordnung (30), umfassend:
- ein erstes Dichtungselement (12) zwischen dem vorderen Gehäuse (7) und dem hinteren Gehäuse (4), das angepasst ist, um eine Dichtung zwischen dem hinteren Gehäuse (4) und dem vorderen Gehäuse (7) bereitzustellen,
- ein zweites Dichtungselement (22) zum Bereitstellen einer Dichtung zwischen dem hinteren Gehäuse (4) und der Wand oder Decke (2) und das um den Umfang eines rückseitigen Abschnitts des hinteren Gehäuses (4) herum angeordnet ist, wobei der rückseitige Abschnitt angepasst ist, um an der Decke oder der Wand (2) befestigt zu werden,
- eine Vielzahl dritter Dichtungselemente (24, 25, 26), die angepasst ist, um eine Vielzahl von Löchern (6, 27, 28) abzudecken, die in dem hinteren Gehäuse (3) definiert sind, und
- eine Dichtungsklappe (23), die durch einen Bereich in dem hinteren Gehäuse (4) ausgebildet ist, der aus Dichtungsmaterial gefertigt ist,
**dadurch gekennzeichnet, dass** die Dichtungsklappe (23) ein viertes Dichtungselement (29) umfasst, das um den Umfang der Dichtungsklappe (23) herum zum Erhöhen Dichtungskapazität der Dichtungsklappe (23) durch Berühren der Decke oder der Wand (2) angeordnet ist, wenn das Montagesystem an der Decke oder der Wand (2) befestigt ist, und dadurch, dass das erste Dichtungselement (12), das zweite Dichtungselement (22), jedes der Vielzahl von dritten Dichtungselementen (24, 25, 26) und das vierte Dichtungselement (29) zusammen einstückig ausgebildet sind, um ein Hauptdichtungselement auszubilden.

2. Montagesystem (1) nach Anspruch 1, wobei das vordere Gehäuse (7) einen Vorsprung (13) umfasst, der Vorsprung (13) umfassend eine Kante (14), die sich von einer Wand (15) des vorderen Gehäuses (7) aus in einem geneigten Winkel (θ) erstreckt, wobei die Kante (14) angepasst ist, um das erste Dichtungselement (12) gegen das hintere Gehäuse (4) zu komprimieren, wodurch ein erster Kompressions(20)-Bereich ausgebildet wird, wenn das vordere Gehäuse (7) mit dem hinteren Gehäuse (4) verbunden ist.

3. Montagesystem (1) nach Anspruch 2, wobei der geneigte Winkel (θ) zwischen 15 Grad und 80 Grad liegt.

4. Montagesystem (1) nach Anspruch 2, wobei die Länge des ersten Kompressions(20)-Bereichs zwischen 0,2 mm und 0,3 mm beträgt.

5. Montagesystem (1) nach einem der vorhergehenden Ansprüche, wobei das Montagesystem (1) ferner eine Aufnahme (8) für eine elektrische oder elektronische Vorrichtung umfasst, die angepasst ist, um an dem vorderen Gehäuse (7) angebracht zu werden, und wobei das Montagesystem (1) ferner angepasst ist, um die elektrische oder elektronische Vorrichtung (9) aufzunehmen.

## Revendications

1. Système de montage (1) permettant de monter un dispositif électrique ou électronique (9) dans ou sur un plafond ou un mur (2), le système de montage (1) comprenant :
- un logement arrière (4) conçu pour monter le dispositif électrique ou électronique (9) dans ou sur le plafond ou le mur (2) ;
- un logement avant (7) conçu pour être relié au logement arrière (4) par coulissement dans le logement arrière (4) ; et
- un agencement d'étanchéité (30) comprenant :
- un premier élément d'étanchéité (12) entre le logement avant (7) et le logement arrière (4) conçu pour fournir un joint d'étanchéité entre le logement arrière (4) et le logement avant (7),
- un deuxième élément d'étanchéité (22) pour fournir un joint d'étanchéité entre le logement arrière (4) et le mur ou le plafond (2) et situé autour de la périphérie d'une partie arrière du logement arrière (4), dans lequel la partie arrière est conçue pour être fixée au plafond ou au mur (2),
- une pluralité de troisièmes éléments d'étanchéité (24, 25, 26) conçus pour couvrir une pluralité de trous (6, 27, 28) définis dans le logement arrière (3), et
- un volet d'étanchéité (23) formé par une zone dans le logement arrière (4) qui est fabriqué en matériau d'étanchéité,
**caractérisé en ce que** le volet d'étanchéité (23) comprend un quatrième élément d'étanchéité (29) situé autour de la périphérie du volet d'étanchéité (23) pour améliorer la capacité d'étanchéité du volet d'étanchéité (23) en touchant le plafond ou le mur (2) lorsque le système de montage est fixé au plafond ou au mur (2), et **en ce que** le premier élément d'étanchéité (12), le deuxième élément d'étanchéité (22), chacun parmi la pluralité de troisièmes éléments d'étanchéité (24, 25, 26), et le quatrième élément d'étanchéité (29) sont formés ensemble en une pièce pour former un élément d'étanchéité maître.

2. Système de montage (1) selon la revendication 1, dans lequel le logement avant (7) comprend une partie saillante (13), la partie saillante (13) comprenant un bord (14) s'étendant à partir d'une paroi (15) du logement avant (7) selon un angle incliné (θ), dans lequel le bord (14) est conçu pour comprimer le premier élément d'étanchéité (12) contre le logement arrière (4), ce qui forme une première région de compression (20), lorsque le logement avant (7) est relié au logement arrière (4).

3. Système de montage (1) selon la revendication 2, dans lequel l'angle incliné (θ) est compris entre 15 degrés et 80 degrés.

4. Système de montage (1) selon la revendication 2, dans lequel la longueur de la première région de compression (20) est comprise entre 0,2 mm et 0,3 mm.

5. Système de montage (1) selon l'une quelconque des revendications précédentes, dans lequel le système de montage (1) comprend en plus un réceptacle pour dispositif électrique ou électronique (8) conçu pour être fixé au logement avant (7) et dans lequel le système de montage (1) est en outre conçu pour recevoir le dispositif électrique ou électronique (9).
